# EUROPEAN PATENT APPLICATION

(11) **EP 4 826 424 A1**
(43) Date of publication of application: **21.10.2026**
(21) Application number: 24910075.1
(22) Date of filing: 26.09.2024
(51) Int. Cl.: G02B 6/38

(54) **OPTICAL SPLITTER, OPTICAL NETWORK SYSTEM, AND METHOD FOR ASSEMBLING OPTICAL SPLITTER**

(30) Priority: 29.12.2023 CN 202311872050
(71) Applicant: Huawei Technologies Co., Ltd., Shenzhen, Guangdong 518129 (CN)
(72) Inventor: XIAO, Yifeng, Shenzhen, Guangdong 518129 (CN); WU, Dan, Shenzhen, Guangdong 518129 (CN); LI, Xiupeng, Shenzhen, Guangdong 518129 (CN)
(74) Representative: Maiwald GmbH
(86) International application number: PCT/CN2024/121298
(87) International publication number: WO 2025/139131

(57) **Abstract**

The present disclosure provides an optical splitter, an optical network system, and an optical splitter assembling method, and relates to the field of optical communication technologies. The optical splitter includes a first housing, a second housing, an optical splitter chip, and a plurality of first optical fiber ferrules. The first housing is provided with a plurality of coupling structures. The second housing is connected to the first housing, and an accommodating cavity is formed between the first housing and the second housing. The optical splitter chip is located in the accommodating cavity, the plurality of first optical fiber ferrules are separately connected to the optical splitter chip through optical fibers, and the plurality of first optical fiber ferrules respectively extend into the plurality of coupling structures. The coupling structure is configured to couple the first optical fiber ferrule to a second optical fiber ferrule of an external optical fiber connector. Because the first housing of the optical splitter provided in the present disclosure is provided with the coupling structure, the optical splitter does not need to include an independent optical fiber adapter. This reduces a quantity of parts included in the optical splitter, lowers costs of the optical splitter, and simplifies an assembly process of the optical splitter.

## Description

This application claims priority to Chinese Patent Application No. 202311872050.4, filed with the China National Intellectual Property Administration on December 29, 2023 and entitled "Optical splitter, optical network system, and method for assembling optical splitter", both of which are incorporated herein by reference in its entireties.

### TECHNICAL FIELD

The present disclosure relates to the field of optical communication technologies, and in particular, to an optical splitter, an optical network system, and an optical splitter assembling method.

### BACKGROUND

With development of fiber to the room (fiber to the room, FTTR), a point to multiple point (point to multiple point, P2MP) optical fiber networking technology is increasingly used in a home scenario. An optical splitter is a key component for implementing the P2MP optical fiber networking technology. The optical splitter is configured to: split a downstream optical signal sent by an upper-level device, and then send split downstream optical signals to a plurality of lower-level devices; and combine upstream optical signals sent by the plurality of lower-level devices, and then send a combined upstream optical signal to the upper-level device.

In a related technology, to implement interconnection between the optical splitter and an external optical fiber connector, the optical splitter needs to include a plurality of optical fiber adapters. Consequently, a large quantity of parts are included in the optical splitter, causing high costs of the optical splitter and a complex assembly process.

### SUMMARY

The present disclosure provides an optical splitter, an optical network system, and an optical splitter assembling method. A first housing of the optical splitter is provided with a coupling structure, and the coupling structure is configured to couple a first optical fiber ferrule of the optical splitter to a second optical fiber ferrule of an external optical fiber connector. In this way, the optical splitter does not need to include an independent optical fiber adapter, so that a quantity of parts included in the optical splitter is reduced, costs of the optical splitter are reduced, and an assembly process of the optical splitter is simplified. Technical solutions of the optical splitter, the optical network system, and the optical splitter assembling method are described as follows.

According to a first aspect, the present disclosure provides an optical splitter. The optical splitter includes a first housing, a second housing, an optical splitter chip, and a plurality of first optical fiber ferrules. The first housing is provided with a plurality of coupling structures. The second housing is connected to the first housing, and an accommodating cavity is formed between the first housing and the second housing. The optical splitter chip is located in the accommodating cavity, the plurality of first optical fiber ferrules are separately connected to the optical splitter chip through optical fibers, and the plurality of first optical fiber ferrules respectively extend into the plurality of coupling structures. The coupling structure is configured to couple the first optical fiber ferrule to a second optical fiber ferrule of an external optical fiber connector.

The coupling structure may also be referred to as an optical fiber adapter structure, an optical fiber adapter, or the like. The coupling structure is integrated on the first housing rather than being an independent part. The optical splitter chip is configured to implement optical splitting and combining functions. The first optical fiber ferrule is configured to input an optical signal to the optical splitter chip, or output an optical signal output by the optical splitter chip.

In the technical solution provided in the present disclosure, it is set that the first housing of the optical splitter is provided with the plurality of coupling structures, and the coupling structure is configured to couple the first optical fiber ferrule of the optical splitter to the second optical fiber ferrule of the external optical fiber connector, so that the optical splitter does not need to include an independent optical fiber adapter. In this way, a quantity of parts included in the optical splitter is reduced, costs of the optical splitter are reduced, and an assembly process of the optical splitter is simplified. For example, at least a process of mounting a plurality of optical fiber adapters on a housing separately is simplified.

In a possible implementation, one end that is of the coupling structure and that is used for interconnecting to the external optical fiber connector has a standard optical fiber adapter structure. A type of the optical fiber adapter structure may be a subscriber connector/standard connector/square connector/square couple connector (subscriber connector/standard connector/square connector/square couple connector, SC) type, or may be an XC (xtreme connector) type. The coupling structure may be configured to interconnect to an external SC-type optical fiber connector or an external XC-type optical fiber connector.

In a possible implementation, the first housing is integrally injection-molded. Alternatively, it is understood as that the first housing is an injection-molded part.

In a possible implementation, the coupling structure includes a first sleeve and a first locking structure. One end of the first sleeve is used for extension of the second optical fiber ferrule of the external optical fiber connector, and the other end is used for extension of the first optical fiber ferrule. The first locking structure is configured to lock the external optical fiber connector. The second housing is provided with a second locking structure, and the second locking structure locks the first optical fiber ferrule.

In the technical solution provided in the present disclosure, it is set that the coupling structure is provided with only one first locking structure, so that complexity and manufacturing difficulty of the coupling structure are reduced, thereby reducing manufacturing costs. In addition, the second housing is provided with the second locking structure configured to lock the first optical fiber ferrule, so that fastening of the first optical fiber ferrule is also ensured.

In a possible implementation, the first locking structure includes two clamping pieces, and the two clamping pieces are respectively disposed on two sides of the first sleeve.

In a possible implementation, the first optical fiber ferrule is a bare ferrule. In other words, there is no housing part of the optical fiber connector outside the first optical fiber ferrule.

In a possible implementation, the first optical fiber ferrule includes a ferrule and a ferrule flange. The ferrule flange and the ferrule are coaxial and are fixedly connected, and the ferrule flange is provided with a limiting convex ring. The second locking structure includes a limiting groove, the limiting convex ring is located in the limiting groove, and the limiting groove and the limiting convex ring are used to limit movement of the first optical fiber ferrule along an axial direction. The ferrule flange may be a metal part. The ferrule may be a ceramic ferrule. The ferrule is provided with a through hole for the optical fiber to pass through.

In a possible implementation, the limiting convex ring is provided with one or more stop grooves arranged in a circumferential direction. The second locking structure further includes a limiting rod, the limiting rod extends into one of the stop grooves, and the limiting rod and the stop groove are used to limit rotation of the first optical fiber ferrule along the circumferential direction.

In a possible implementation, the second locking structure further includes a clamping structure, and the ferrule flange is clamped to the clamping structure.

In a possible implementation, the second locking structure includes an abutting portion, and the first sleeve is provided with a limiting step near its outer end. The optical splitter further includes a second sleeve. The second sleeve is located within the first sleeve, one end of the second sleeve abuts against the limiting step, and the other end abuts against the abutting portion of the second locking structure. The first optical fiber ferrule extends into the second sleeve. The second sleeve may be a ceramic sleeve, and the first optical fiber ferrule may be in interference fit with the second sleeve.

In the technical solution provided in the present disclosure, it is set that only one end of the first sleeve is provided with the limiting step, so that the second sleeve can conveniently extend into the first sleeve. In addition, the limiting step and the abutting portion of the second locking structure jointly limit the two ends of the second sleeve, to prevent the second sleeve from being detached from the first sleeve. During installation of the second sleeve, the second sleeve first extends into the first sleeve from one end inside the first sleeve, and then the first housing and the second housing are assembled. When the first housing and the second housing are assembled, the second locking structure abuts against the second sleeve, to limit the second sleeve.

In a possible implementation, both the two ends of the first sleeve are provided with limiting steps. The optical splitter further includes a second sleeve. The second sleeve is located within the first sleeve, and two ends of the second sleeve respectively abut against the limiting steps at the two ends of the first sleeve. The first optical fiber ferrule extends into the second sleeve. The second sleeve may be a ceramic sleeve, and the first optical fiber ferrule may be in interference fit with the second sleeve.

In the technical solution provided in the present disclosure, when the second sleeve is installed, the first sleeve is expanded by using a tool, so that an inner diameter of the limiting step is greater than an outer diameter of the second sleeve. Then, the second sleeve extends into the first sleeve, and the first sleeve is loosened. In this case, the inner diameter of the limiting step of the first sleeve is reduced, and the two ends of the second sleeve abut against the limiting steps at the two ends of the first sleeve.

In a possible implementation, the second sleeve is provided with a slot, an extension direction of the slot is the same as an axial direction of the second sleeve, and the slot runs through the two ends of the second sleeve.

In a possible implementation, the plurality of first optical fiber ferrules are fastened on the second housing and protrude from a same side of the second housing. In this way, integrated grinding of the plurality of first optical fiber ferrules can be implemented.

In a possible implementation, the coupling structure includes a first sleeve. One end of the first sleeve is used for extension of the second optical fiber ferrule of the external optical fiber connector, and the other end is used for extension of the first optical fiber ferrule. In a process of assembling the first housing and the second housing, the first housing and the second housing can slide relative to each other to a locking position, so that the plurality of first optical fiber ferrules respectively extend into a plurality of first sleeves.

In the technical solution provided in the present disclosure, before the first housing and the second housing are assembled, the plurality of first optical fiber ferrules are first fastened on the second housing, and then the first housing and the second housing are operated to slide relative to each other to the locking position, and allow the plurality of first optical fiber ferrules respectively to slide into the plurality of first sleeves. In this way, there is no need to separately operate each of the first optical fiber ferrules to insert the first optical fiber ferrule into the first sleeve, thereby simplifying an assembly process of the optical splitter.

In a possible implementation, one of the first housing and the second housing is provided with a guide channel, and the other is provided with a guide rail. The guide rail is located within the guide channel, and extension directions of the guide channel and the guide rail are parallel to axial directions of the first sleeve and the first optical fiber ferrule. In this way, the first housing and the second housing can slide relative to each other. When the guide rail is located within the guide channel, the plurality of first optical fiber ferrules are respectively aligned with the plurality of first sleeves, to ensure that in a sliding process of the first housing and the second housing, the plurality of first optical fiber ferrules can respectively extend into the plurality of first sleeves.

In a possible implementation, the first housing is provided with the guide channel, and the second housing is provided with the guide rail.

In a possible implementation, a first groove wall of the guide channel is provided with a first protrusion, and a first side wall of the guide rail is provided with a second protrusion. The first groove wall is opposite to the first side wall, the first protrusion abuts against the first side wall, the second protrusion abuts against the first groove wall, and the first protrusion and the second protrusion are staggered.

In the technical solution provided in the present disclosure, based on the foregoing arrangement, the first side wall and the first groove wall do not completely abut against each other, but only partially abut against each other (where positions in which the protrusions are located abut against each other, and there is a clearance between other positions). In this way, in an aspect, it is ensured that the first housing and the second housing can slide smoothly. For example, if the first side wall completely abuts against the first groove wall, it is easy to get stuck in a sliding process because a fitting surface is excessively long. In another aspect, a case in which relative shaking of the first housing and the second housing even causes the first optical fiber ferrule not to smoothly slide into the first sleeve can be avoided. For example, if the first side wall and the first groove wall are completely in clearance fit, alignment precision between the first optical fiber ferrule and the first sleeve is poor.

In a possible implementation, the guide channel has a first end and a second end. The guide rail has a third end and a fourth end. In the process of assembling the first housing and the second housing, the first end of the guide channel is first interconnected to the third end of the guide rail. The first protrusion is close to the second end of the guide channel, and the second protrusion is close to the fourth end of the guide rail.

In the technical solution provided in the present disclosure, in the process of assembling the first housing and the second housing, because neither the first end of the guide channel nor the third end of the guide rail is provided with a protrusion, in an initial stage, the guide channel and the guide rail are in clearance fit, and the guide rail can slide smoothly to the guide channel. Then, when the first protrusion is in contact with the first side wall of the guide rail, and/or the second protrusion is in contact with the first groove wall of the guide channel, the guide channel and the guide rail are closely fitted, and the guide rail is not easily shaken. This improves alignment precision between the first optical fiber ferrule and the first sleeve, and ensures that the first optical fiber ferrule can smoothly slide to the first sleeve.

In a possible implementation, a part that is of the first side wall and that abuts against the first protrusion is provided with a plurality of grooves arranged at intervals along the extension direction of the guide rail. The first protrusion may be in a shape of a long strip. In this way, a fitting length between the first protrusion and the first side wall can be reduced, to ensure that the first housing and the second housing can slide smoothly relative to each other.

In a possible implementation, a part that is of the first groove wall and that abuts against the second protrusion is provided with a plurality of grooves arranged at intervals along the extension direction of the guide channel. The second protrusion may be in a shape of a long strip. In this way, a fitting length between the second protrusion and the first groove wall can be reduced, thereby ensuring that the first housing and the second housing can slide smoothly relative to each other.

In a possible implementation, one of the first housing and the second housing is provided with a clamping protrusion, and the other is provided with a clamping slot. When the first housing and the second housing slide relative to each other to the locking position, the clamping protrusion is clamped to the clamping slot.

In the technical solution provided in the present disclosure, based on the foregoing arrangement, when the first housing and the second housing are operated to slide relative to each other to the locking position, the clamping protrusion and the clamping slot are automatically clamped, so that the first housing and the second housing are fixedly connected automatically, thereby further simplifying an assembly process of the optical splitter.

In a possible implementation, the first housing is provided with the clamping protrusion, and the clamping protrusion is located between two adjacent coupling structures. The second housing is provided with the clamping slot, and the clamping slot is located between two adjacent first optical fiber ferrules.

In the technical solution provided in the present disclosure, it is set that the clamping protrusion is located between two adjacent coupling structures, so that the clamping protrusion and the coupling structure are staggered, to avoid a case in which the clamping protrusion hinders forming of the coupling structure.

In a possible implementation, the first housing is provided with the clamping slot, and the clamping slot is located before two adjacent coupling structures. The second housing is provided with the clamping protrusion, and the clamping protrusion is located between two adjacent first optical fiber ferrules.

In a possible implementation, the coupling structure of the first housing is a first coupling structure, and the first coupling structure includes a first accommodating groove. The second housing is further provided with a second coupling structure. The second coupling structure includes a second accommodating groove. The first accommodating groove and the second accommodating groove form a first sleeve, and the first sleeve is configured to accommodate the first optical fiber ferrule of the optical splitter and the second optical fiber ferrule of the external optical fiber connector.

In the technical solution provided in the present disclosure, during optical splitter assembly, the first optical fiber ferrule and the second sleeve (if the second sleeve exists) may be first placed in the first accommodating groove or the second accommodating groove, and then the first housing and the second housing are assembled in an up and down snap-fitting manner, so that the first accommodating groove is opposite to the second accommodating groove, to form the first sleeve.

According to a second aspect, the present disclosure provides an optical network system. The optical network system includes the optical splitter according to any one of the possible implementations in the first aspect and an optical network unit connected to the optical splitter.

In a possible implementation, the optical network system includes a primary optical network unit (optical network unit, ONU), the optical splitter, and a plurality of secondary ONUs. The primary ONU is connected to an input port of the optical splitter, and a plurality of output ports of the optical splitter are respectively connected to the plurality of secondary ONUs.

In a possible implementation, the primary ONU may be a primary FTTR device, and the secondary ONU may be a secondary FTTR device.

According to a third aspect, the present disclosure provides an optical splitter assembling method. The assembling method includes: fastening an optical splitter chip and a plurality of first optical fiber ferrules on a second housing, and connecting the optical splitter chip to the plurality of first optical fiber ferrules through optical fibers; and assembling a first housing and the second housing, and extending the plurality of first optical fiber ferrules into a plurality of coupling structures of the first housing respectively. The coupling structure is configured to couple the first optical fiber ferrule to a second optical fiber ferrule of an external optical fiber connector. The assembling method is used to assemble the optical splitter according to any one of the possible implementations in the first aspect.

In a possible implementation, the fastening an optical splitter chip and a plurality of first optical fiber ferrules on a second housing, and connecting the optical splitter chip to the plurality of first optical fiber ferrules through optical fibers includes: fastening the optical splitter chip on the second housing; connecting the optical splitter chip to first ends of a plurality of optical fibers; fastening the plurality of first optical fiber ferrules on the second housing; and respectively connecting the plurality of first optical fiber ferrules to second ends of the plurality of optical fibers.

In a possible implementation, the plurality of first optical fiber ferrules protrude from a same side of the second housing. After the connecting the optical splitter chip to the plurality of first optical fiber ferrules through optical fibers, the assembling method further includes: performing integrated grinding on the plurality of first optical fiber ferrules.

In a possible implementation, the coupling structure includes a first sleeve. One end of the first sleeve is used for extension of the second optical fiber ferrule of the external optical fiber connector, and the other end is used for extension of the first optical fiber ferrule. The optical splitter further includes a plurality of second sleeves. Before the assembling a first housing and the second housing, the assembling method further includes: extending the plurality of second sleeves into a plurality of first sleeves respectively.

In a possible implementation, the coupling structure includes a first sleeve. One end of the first sleeve is used for extension of the second optical fiber ferrule of the external optical fiber connector, and the other end is used for extension of the first optical fiber ferrule. The optical splitter further includes a plurality of second sleeves. Before the assembling a first housing and the second housing, the assembling method further includes: respectively sleeving the plurality of second sleeves on the plurality of first optical fiber ferrules.

In a possible implementation, the coupling structure includes a first sleeve. One end of the first sleeve is used for extension of the second optical fiber ferrule of the external optical fiber connector, and the other end is used for extension of the first optical fiber ferrule. The assembling a first housing and the second housing, and extending the plurality of first optical fiber ferrules into a plurality of coupling structures of the first housing includes: operating the first housing and the second housing to slide relative to each other to a locking position, so that the plurality of first optical fiber ferrules respectively extend into the plurality of first sleeves.

### BRIEF DESCRIPTION OF DRAWINGS

FIG. 1 is a diagram of an optical network system according to an embodiment of the present disclosure;
FIG. 2 is a diagram of an optical splitter according to an embodiment of the present disclosure;
FIG. 3 is an exploded view of an optical splitter according to an embodiment of the present disclosure;
FIG. 4 is a top view of a second housing, an optical splitter chip, and a first optical fiber ferrule according to an embodiment of the present disclosure;
FIG. 5 is a diagram of an internal structure of an optical splitter according to an embodiment of the present disclosure;
FIG. 6 is a diagram of a first optical fiber ferrule and a coupling structure according to an embodiment of the present disclosure;
FIG. 7 is a diagram of a first optical fiber ferrule according to an embodiment of the present disclosure;
FIG. 8 is a diagram of a first optical fiber ferrule and a second locking structure according to an embodiment of the present disclosure;
FIG. 9 is a diagram of a second housing, an optical splitter chip, a first optical fiber ferrule, and a second sleeve according to an embodiment of the present disclosure;
FIG. 10 is a partially enlarged diagram of a part framed in FIG. 9 according to an embodiment of the present disclosure;
FIG. 11 is a sectional view of a first housing according to an embodiment of the present disclosure;
FIG. 12 is a partially enlarged diagram of a part framed in FIG. 11 according to an embodiment of the present disclosure;
FIG. 13 is a partial sectional view of an optical splitter according to an embodiment of the present disclosure;
FIG. 14 is a partially enlarged diagram of a part framed in FIG. 13 according to an embodiment of the present disclosure;
FIG. 15 is a diagram of a first sleeve and a second sleeve according to an embodiment of the present disclosure;
FIG. 16 is a first diagram of a first housing according to an embodiment of the present disclosure;
FIG. 17 is a first diagram of a second housing according to an embodiment of the present disclosure;
FIG. 18 is a diagram of a sliding connection between a first housing and a second housing according to an embodiment of the present disclosure;
FIG. 19 is a second diagram of a first housing according to an embodiment of the present disclosure;
FIG. 20 is a second diagram of a second housing according to an embodiment of the present disclosure;
FIG. 21 is a diagram of an interconnecting process of a first housing and a second housing according to an embodiment of the present disclosure;
FIG. 22 is a partially enlarged diagram of a part A framed in FIG. 21 according to an embodiment of the present disclosure;
FIG. 23 is a partially enlarged diagram of a part B framed in FIG. 21 according to an embodiment of the present disclosure;
FIG. 24 is a diagram of an assembly process of an optical splitter according to an embodiment of the present disclosure;
FIG. 25 is another diagram of a first housing according to an embodiment of the present disclosure;
FIG. 26 is another diagram of a second housing according to an embodiment of the present disclosure; and
FIG. 27 is a flowchart of an optical splitter assembling method according to an embodiment of the present disclosure.

Descriptions of reference numerals:
100: Primary ONU; 200: Optical splitter; 300: Slave ONU;
1: First housing; 11: Coupling structure; 111a: First accommodating groove; 111b: Second accommodating groove; 111: First sleeve; 1111: Limiting step; 112: First locking structure; 112a: First sub-locking structure; 112b: Second sub-locking structure; 12: Guide channel; 12a: First end; 12b: Second end; 121: First groove wall; 1211: First protrusion; 122: Second groove wall; 13: Clamping protrusion; 14: Baffle plate;
2: Second housing; 20: Second coupling structure; 21: Second locking structure; 210: Second limiting rod; 211: Limiting groove; 212: First limiting rod; 213: Clamping structure; 214: Abutting portion; 22: Guide rail; 22a: Third end; 22b: Fourth end; 221: First side wall; 2211: Second protrusion; 2212: Groove; 222: Second side wall; 23: Clamping recess; 24: Baffle groove;
3: Optical splitter chip;
4: First optical fiber ferrule; 41: Ferrule; 42: ferrule flange; 421: Limiting convex ring; 420: Stop groove;
5: Second sleeve; and 51: Slot.

### DESCRIPTION OF EMBODIMENTS

With development of fiber to the room (fiber to the room, FTTR), a point to multiple point (point to multiple point, P2MP) optical fiber networking technology is increasingly used in a home scenario. An optical splitter is a key component for implementing the P2MP optical fiber networking technology. The optical splitter is configured to: split a downstream optical signal sent by an upper-level device, and then send split downstream optical signals to a plurality of lower-level devices; and combine upstream optical signals sent by the plurality of lower-level devices, and then send a combined upstream optical signal to the upper-level device.

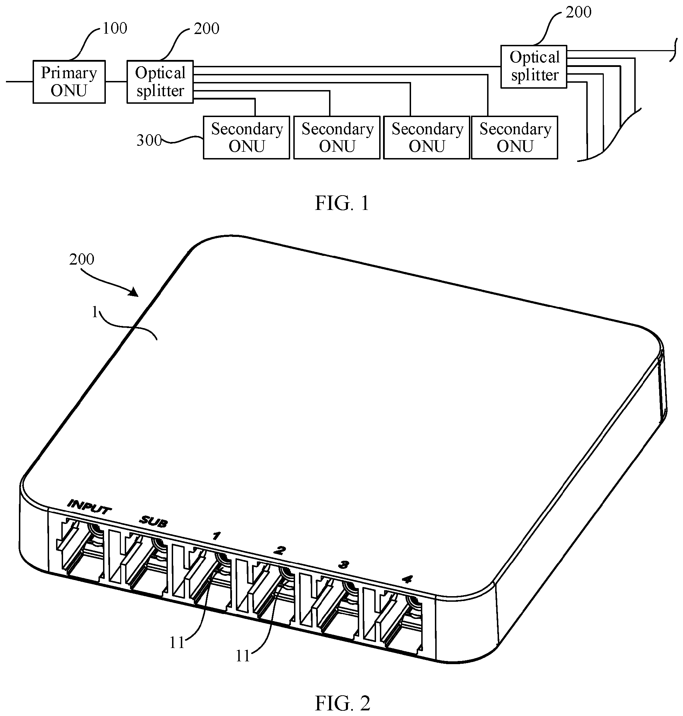

For example, as shown in FIG. 1, the upper-level device is a primary optical network unit (optical network unit, ONU) 100, and the lower-level device is a secondary ONU 300. The primary ONU 100 may be a primary FTTR device, and the secondary ONU 300 may be a secondary FTTR device.

An optical splitter 200 in a related technology includes an upper housing, a lower housing, an optical splitter chip, a plurality of optical fiber connectors, and a plurality of optical fiber adapters. One end of the plurality of optical fiber connectors is connected to the optical splitter chip through a plurality of optical fibers, and the other end is inserted into the plurality of optical fiber adapters. The optical fiber adapter is fastened between the upper housing and the lower housing, and the optical fiber adapter also implements fastening of the optical fiber connector. The optical splitter 200 in the related technology is assembled by using the following steps.

Step 1: Place the optical splitter chip on a tray. Step 2: Couple the optical splitter chip to an optical fiber array. Step 3: Fasten the optical fiber and an optical fiber ferrule using adhesive dispensing, to connect the optical fiber ferrule to the optical splitter chip through the optical fiber. Step 4: Grind the optical fiber ferrule. Step 5: Wrap the optical fiber ferrule by using a housing part of the optical fiber connector, to obtain the optical fiber connector. Step 6: Transfer the optical splitter chip, the optical fiber connector, and the optical fiber from the tray to the lower housing, and fasten the optical splitter chip using adhesive dispensing. Step 7: Install the optical fiber adapter on the lower housing. Step 8: Interconnect the optical fiber connector to the optical fiber adapter, which also implements fastening of the optical fiber connector. Step 9: Assemble the lower housing and the upper housing together to obtain the optical splitter 200.

It can be learned that, the optical splitter 200 in the related technology includes a large quantity of parts. This accordingly makes an assembly process of the optical splitter 200 complex, and increases costs of the optical splitter 200.

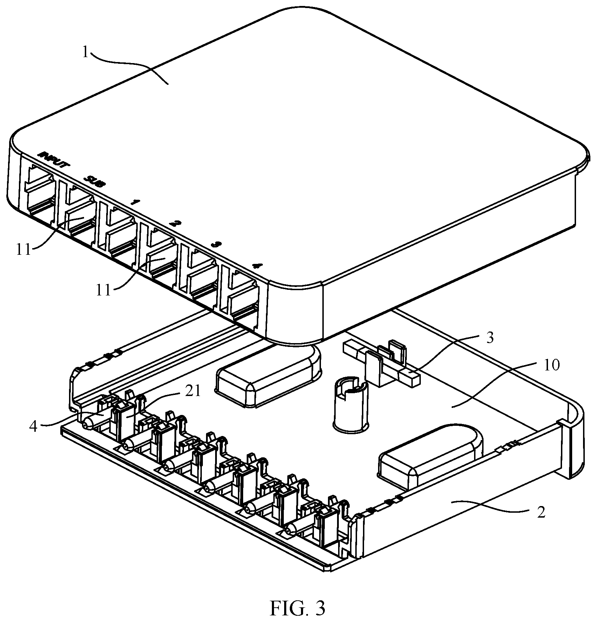

In view of the foregoing technical problems, embodiments of the present disclosure provide an optical splitter 200. As shown in FIG. 2 to FIG. 5, the optical splitter 200 includes a first housing 1, a second housing 2, an optical splitter chip 3, and a plurality of first optical fiber ferrules 4. The first housing 1 is provided with a plurality of coupling structures 11. The second housing 2 is connected to the first housing 1, and an accommodating cavity 10 is formed between the first housing 1 and the second housing 2. The optical splitter chip 3 is located in the accommodating cavity 10, the plurality of first optical fiber ferrules 4 are separately connected to the optical splitter chip 3 through optical fibers, and the plurality of first optical fiber ferrules 4 respectively extend into the plurality of coupling structures 11. The coupling structure 11 is configured to couple the first optical fiber ferrule 4 to a second optical fiber ferrule of an external optical fiber connector.

As shown in FIG. 1 and FIG. 2, the optical splitter 200 may have an input port (INPUT) and a plurality of output ports (ports identified by 1, 2, 3, and 4 in FIG. 2). The optical splitter 200 may receive a downstream optical signal through the input port, split the downstream optical signal into a plurality of optical signals, and output the plurality of signals through the plurality of output ports. The optical splitter 200 may further receive a plurality of upstream optical signals through the plurality of output ports, combine the plurality of upstream optical signals, and then output a combined optical signal through the input port. In some examples, as shown in FIG. 1 and FIG. 2, the optical splitter 200 further includes a cascading port (SUB). The cascading port may be configured to connect to another optical splitter 200, or may be configured to connect to a secondary ONU 300.

The ports of the optical splitter 200 are interconnected to the external optical fiber connector through the coupling structures 11. The coupling structure 11 may also be referred to as an optical fiber adapter structure, an optical fiber adapter, or the like. The coupling structure 11 is integrated on the first housing 1 rather than being an independent part. In some examples, the first housing 1 is integrally injection-molded.

The optical splitter chip 3 is configured to implement functions of splitting light and combining light. The first optical fiber ferrule 4 is configured to input, to the optical splitter chip 3, an optical signal input by the external optical fiber connector, or output, to the external optical fiber connector, an optical signal output by the optical splitter chip 3.

In the technical solution provided in embodiments of the present disclosure, it is set that the first housing 1 of the optical splitter 200 is provided with the plurality of coupling structures 11, and the coupling structure 11 is configured to couple the first optical fiber ferrule 4 of the optical splitter 200 to the second optical fiber ferrule of the external optical fiber connector, so that the optical splitter 200 can be interconnected to the external optical fiber connector without including an independent optical fiber adapter. In this way, a quantity of parts included in the optical splitter 200 is reduced, costs of the optical splitter 200 are reduced, and an assembly process of the optical splitter 200 is simplified. For example, at least a process of installing a plurality of optical fiber adapters on a housing is simplified.

A specific implementation of the coupling structure 11 is not limited in embodiments of the present disclosure. In some examples, the coupling structure 11 includes a sleeve and two locking structures. One end of the sleeve is used for extension of the second optical fiber ferrule of the external optical fiber connector, and the other end is used for extension of the first optical fiber ferrule 4 inside the optical splitter 200. The two locking structures are respectively configured to lock the external optical fiber connector and the first optical fiber ferrule 4 inside the optical splitter 200.

In this implementation, the first optical fiber ferrule 4 of the optical splitter 200 may be wrapped with a housing of the optical fiber connector (in other words, the first optical fiber ferrule 4 is disposed in the optical fiber connector), and the locking structure may lock the first optical fiber ferrule 4 by locking the housing part of the optical fiber connector. In other words, both two ends of the coupling structure 11 are provided with standard optical fiber adapter structures, and both the two ends of the coupling structure 11 can be interconnected to standard optical fiber connectors. In some examples, a type of each of the optical fiber adapter structures at the two ends of the coupling structure 11 is a subscriber connector/standard connector/square connector/square couple connector (subscriber connector/standard connector/square connector/square couple connector, SC) type, or may be an XC (xtreme connector) type. The coupling structure 11 is configured to interconnect to an SC-type optical fiber connector or an XC-type optical fiber connector.

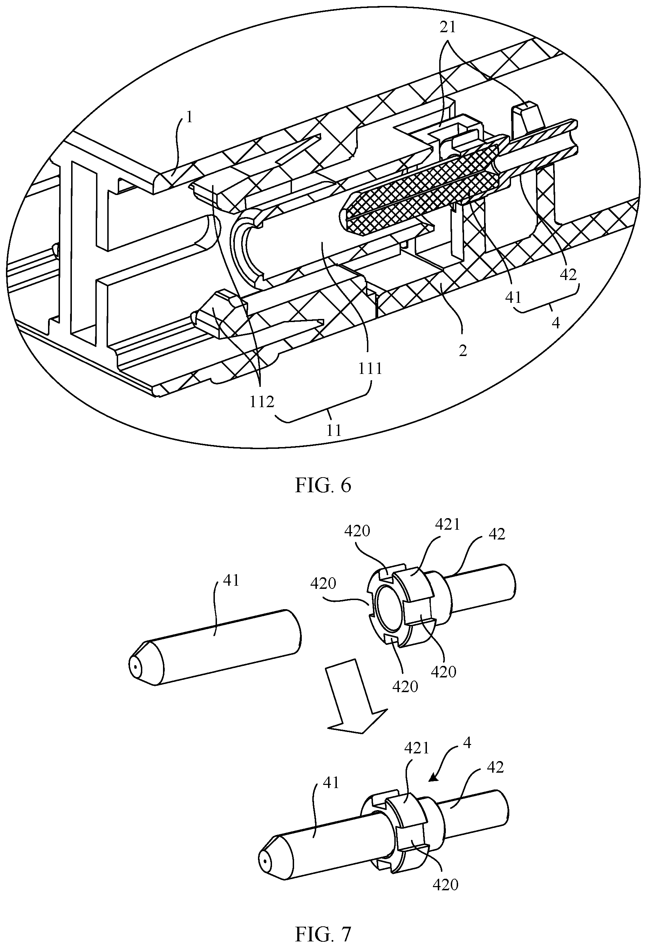

In some other examples, as shown in FIG. 6, the coupling structure 11 includes a first sleeve 111 and a first locking structure 112. One end of the first sleeve 111 is used for extension of the second optical fiber ferrule of the external optical fiber connector, and the other end is used for extension of the first optical fiber ferrule 4 of the optical splitter 200. The first locking structure 112 is configured to lock the external optical fiber connector. To be specific, one end of the coupling structure 11 has a standard optical fiber adapter structure, and the end is used for interconnecting to an external standard optical fiber connector. In some examples, a type of the standard optical fiber adapter structure is an SC type or an XC type. The coupling structure 11 is configured to interconnect to an SC-type optical fiber connector or an XC-type optical fiber connector.

In this way, because the coupling structure 11 is provided with only one first locking structure 112, compared with an implementation in which the coupling structure 11 is provided with two locking structures, difficulty in manufacturing the coupling structure 11 is reduced. In addition, because the coupling structure 11 can only lock the external optical fiber connector, the coupling structure 11 cannot lock the first optical fiber ferrule 4. In some examples, as shown in FIG. 6, the second housing 2 is provided with a second locking structure 21, and the second locking structure 21 is configured to lock the first optical fiber ferrule 4. It can be learned that, based on the foregoing arrangement, a structure of the coupling structure 11 is simplified, and the first optical fiber ferrule 4 is locked.

In addition, the second locking structure 21 is properly designed, so that the housing part of the optical fiber connector may not be disposed outside the first optical fiber ferrule 4, that is, the first optical fiber ferrule 4 may be a bare ferrule. Therefore, costs of the optical splitter 200 are further reduced.

In some examples, as shown in FIG. 6, the first locking structure 112 includes two clamping pieces, the two clamping pieces are respectively disposed on two sides of the first sleeve 111, and the first locking structure 112 is configured to be clamped to the external optical fiber connector.

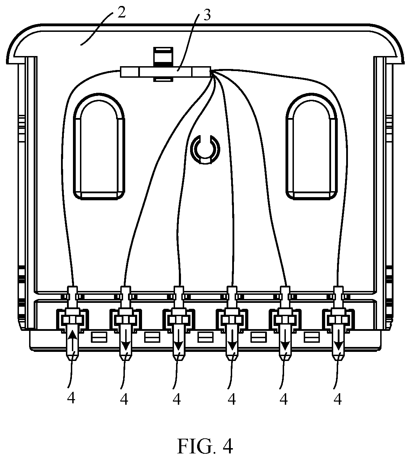

In some examples, as shown in FIG. 4, the plurality of first optical fiber ferrules 4 are fastened on the second housing 2, and protrude from a same side of the second housing 2. In this way, in the assembly process of the optical splitter 200, integrated grinding of the plurality of first optical fiber ferrules 4 can be implemented.

The following uses examples to describe an implementation of the second locking structure 21 when the first optical fiber ferrule 4 is a bare ferrule.

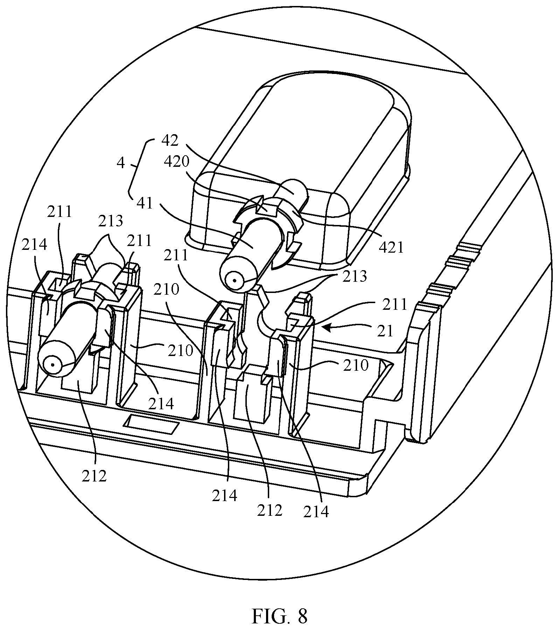

In some examples, as shown in FIG. 7, the first optical fiber ferrule 4 includes a ferrule 41 and a ferrule flange 42. The ferrule flange 42 and the ferrule 41 are coaxial and are fixedly connected, and the ferrule flange 42 is provided with a limiting convex ring 421. As shown in FIG. 8, the second locking structure 21 includes a limiting groove 211, and the limiting convex ring 421 is located in the limiting groove 211. The limiting groove 211 and the limiting convex ring 421 are used to limit movement of the first optical fiber ferrule 4 along an axial direction.

In some examples, as shown in FIG. 8, the second locking structure 21 includes two second limiting rods 210, and the two second limiting rods 210 are respectively disposed on two sides of the first optical fiber ferrule 4, to limit movement of the first optical fiber ferrule 4 along a radial direction. Both the two second limiting rods 210 are provided with limiting grooves 211, and two sides of the limiting convex ring 421 are respectively located in the two limiting grooves 211.

In some examples, as shown in FIG. 7 and FIG. 8, the limiting convex ring 421 is provided with one or more stop grooves 420 arranged in a circumferential direction. The second locking structure 21 further includes a first limiting rod 212, and the first limiting rod 212 extends into one of the stop grooves 420. The first limiting rod 212 and the stop groove 420 are used to limit rotation of the first optical fiber ferrule 4 along the circumferential direction. There may be one or more first limiting rods 212.

A location of the first limiting rod 212 is not limited in embodiments of the present disclosure. In some examples, as shown in FIG. 8, the limiting rod 212 is located between the two second limiting rods 210, and extends into a stop groove 420 at the bottom of the limiting convex ring 421. In some other examples, the first limiting rod 212 may alternatively be disposed on the second limiting rod 210, and extend into a stop groove 420 on a side of the limiting convex ring 421.

In some examples, as shown in FIG. 8, the second locking structure 21 further includes a clamping structure 213, and the ferrule flange 42 is clamped to the clamping structure 213. The clamping structure 213 can prevent the first optical fiber ferrule 4 from being detached from the first housing 1.

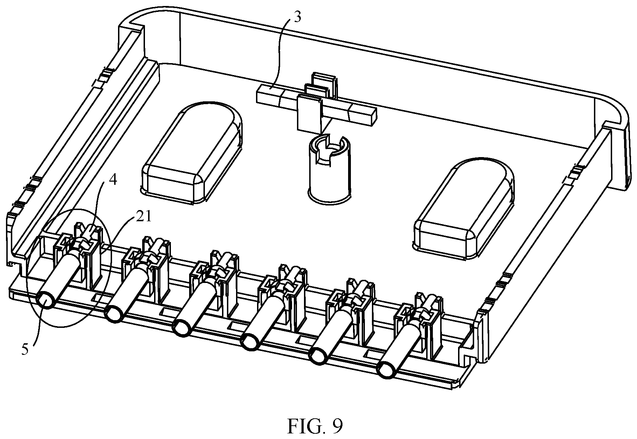

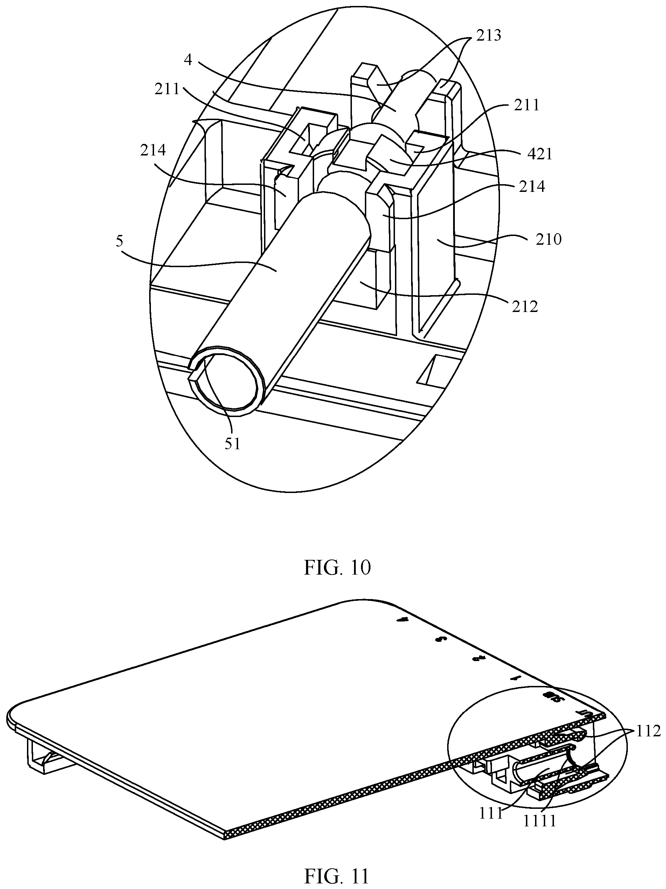

In some examples, to improve tightness of coupling between the first optical fiber ferrule 4 of the optical splitter 200 and the second optical fiber ferrule of the external optical fiber connector, as shown in FIG. 9 and FIG. 10, the optical splitter 200 further includes a second sleeve 5. The second sleeve 5 is configured to be sleeved on the first optical fiber ferrule 4 of the optical splitter 200 and the second optical fiber ferrule of the external optical fiber connector, and is in interference fit with the two optical fiber ferrules. Therefore, the second sleeve 5 can fasten the two optical fiber ferrules and tightly couple the two optical fiber ferrules together. The second sleeve 5 may be a ceramic sleeve. The second sleeve 5 is an independent part.

In the related technology, the second sleeve 5 is directly limited to a standard optical fiber adapter. However, the optical fiber adapter is no longer used in the technical solution provided in embodiments of the present disclosure. Therefore, a corresponding limiting structure needs to be designed to limit the second sleeve 5. The following uses examples to describe a manner for limiting the second sleeve 5.

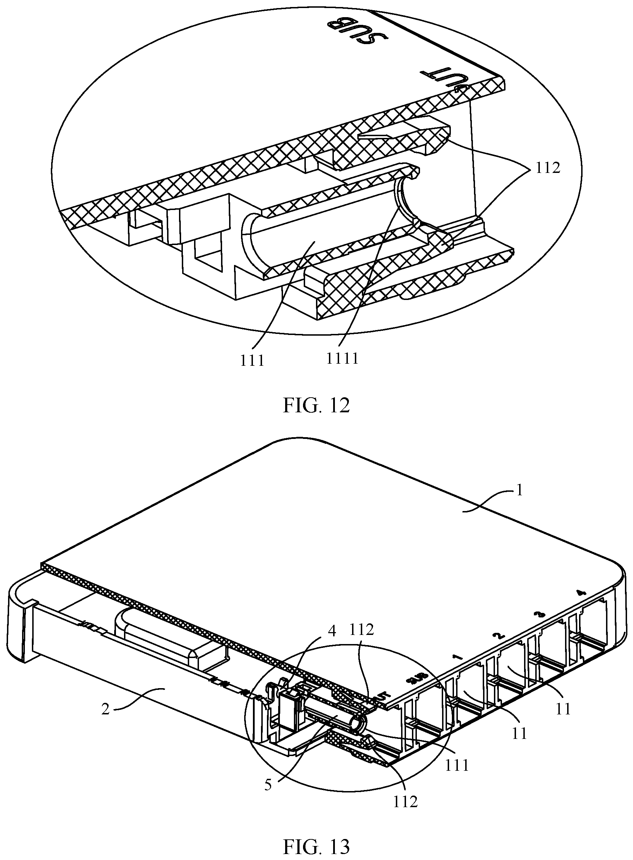

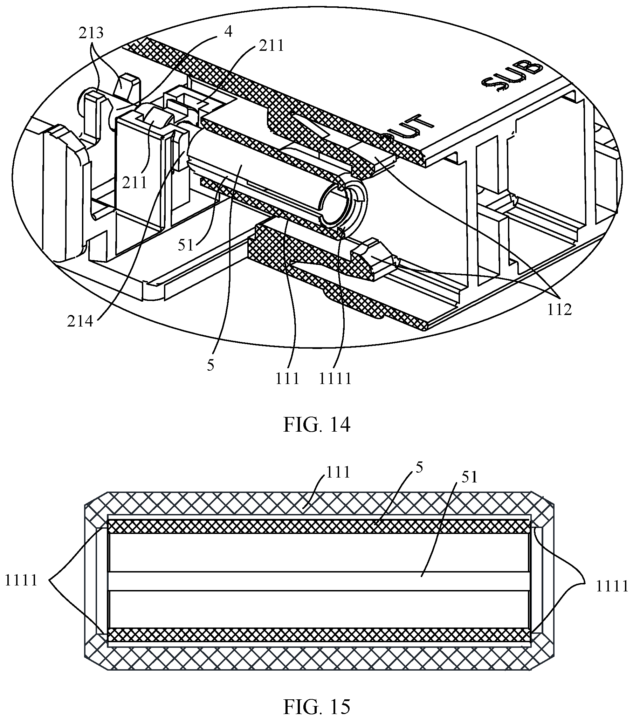

In some examples, as shown in FIG. 9 and FIG. 10, the second locking structure 21 includes abutting portions 214. As shown in FIG. 11 and FIG. 12, the first sleeve 111 is provided with a limiting step 1111 near its outer end. As shown in FIG. 13 and FIG. 14, the second sleeve 5 is located within the first sleeve 111, one end of the second sleeve 5 abuts against the limiting step 1111, and the other end abuts against the abutting portions 214 of the second locking structure 21. The limiting step 1111 protrudes towards an inner side of the first sleeve 111.

When the second sleeve 5 is installed, the second sleeve 5 extends into the first sleeve 111 from one end inside the first sleeve 111, so that the second sleeve 5 abuts against the limiting step 1111. Then, the first housing 1 and the second housing 2 are assembled. When the assembly is completed, the abutting portions 214 automatically abut against the first sleeve 111, to limit the first sleeve 111.

In some examples, as shown in FIG. 10, the second locking structure 21 includes the two abutting portions 214, and the two abutting portions 214 are respectively disposed on two sides of the first optical fiber ferrule 4. As shown in FIG. 10, the abutting portion 214 may be a boss on the second limiting rod 210.

In some other examples, as shown in FIG. 15, both the two ends of the first sleeve 111 are provided with limiting steps 1111. The second sleeve 5 is located within the first sleeve 111, and the two ends of the second sleeve 5 respectively abut against the limiting steps 1111 at the two ends of the first sleeve 111.

When the second sleeve 5 is installed, the first sleeve 111 needs to be expanded, so that an inner diameter of the limiting step 1111 is greater than an outer diameter of the second sleeve 5. Then, the second sleeve 5 extends into the first sleeve 111, and the first sleeve 111 is loosened. In this case, the inner diameter of the limiting step 1111 of the first sleeve 111 is reduced, and the two ends of the second sleeve 5 abut against the limiting steps 1111 at the two ends of the first sleeve 111.

In some examples, as shown in FIG. 10, FIG. 14, and FIG. 15, the second sleeve 5 is provided with a slot 51, and the slot 51 extends along an axial direction of the second sleeve 5 and runs through the two ends of the second sleeve 5.

The following uses examples to describe a process of assembling the first housing 1 and the second housing 2.

Because the coupling structure 11 is provided with the first sleeve 111, and the first sleeve 111 is of a closed structure (in other words, a cross section of the first sleeve 111 is a ring, for example, a circular ring or a square ring), the first optical fiber ferrule 4 needs to be placed in the first sleeve 111 in a manner of extending from one side.

It should be noted that a specific form of the first sleeve 111 is not limited in embodiments of the present disclosure. In some other examples, a sleeve wall of the first sleeve 111 is provided with an opening, and a size of the opening is less than a size of the first optical fiber ferrule 4 and a size of the second sleeve 5. In other words, the first optical fiber ferrule 4 and the second sleeve 5 cannot be placed in the first sleeve 111 via the opening of the sleeve wall of the first sleeve 111.

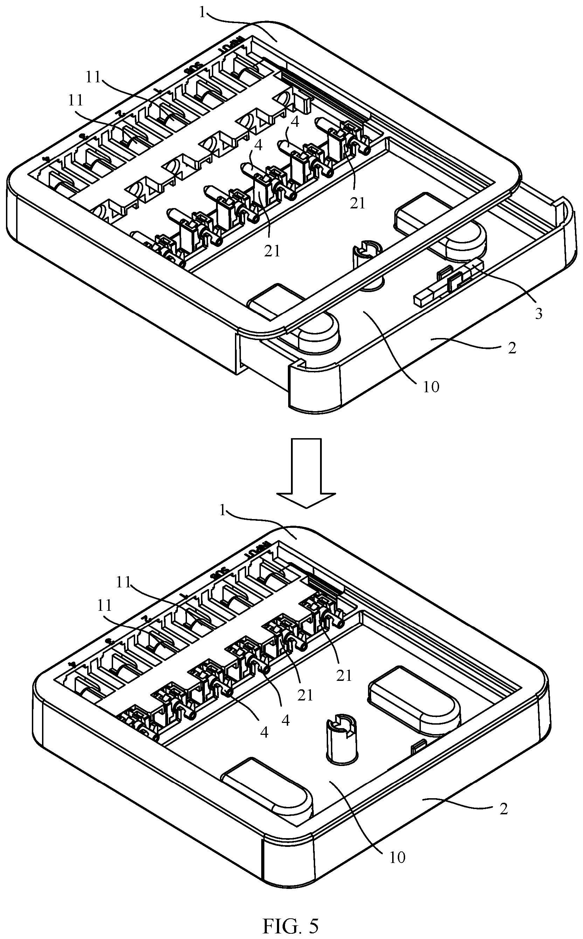

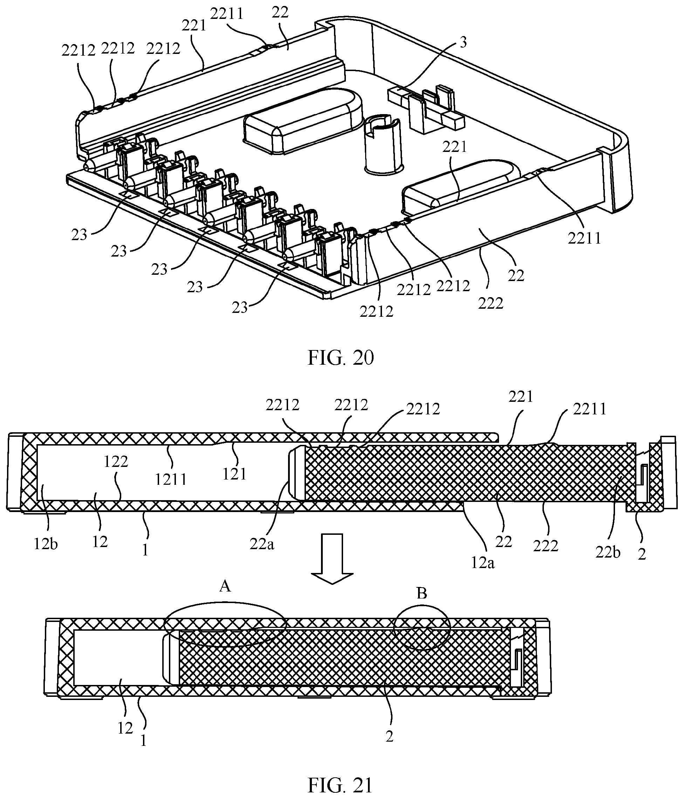

To simplify the assembly process of the optical splitter 200, in some examples, as shown in FIG. 5 and FIG. 21, in the process of assembling the first housing 1 and the second housing 2, the first housing 1 and the second housing 2 can slide relative to each other to a locking position, so that the plurality of first optical fiber ferrules 4 respectively extend into first sleeves 111. In a related technology, a plurality of optical fiber connectors need to be respectively inserted into a plurality of optical fiber adapters, and then a housing is assembled. However, in the technical solution provided in embodiments of the present disclosure, when the first housing 1 and the second housing 2 are assembled, the plurality of first optical fiber ferrules 4 uniformly extend into a plurality of first sleeves 111. The assembly process of the optical splitter 200 provided in embodiments of the present disclosure is simple.

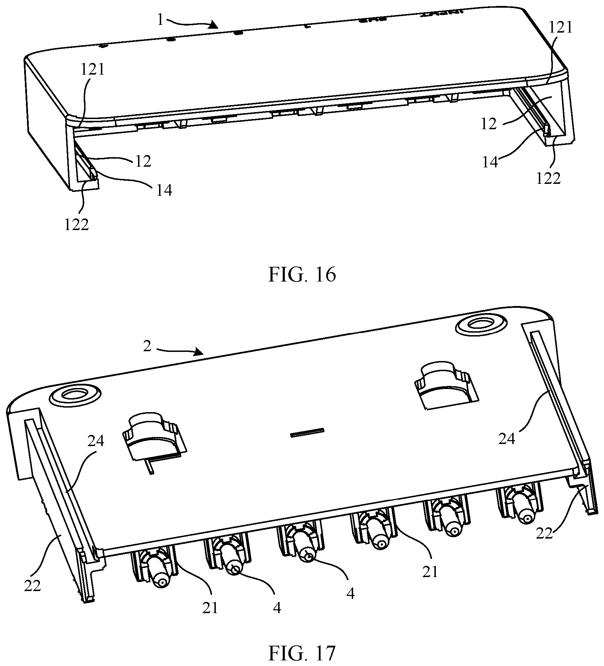

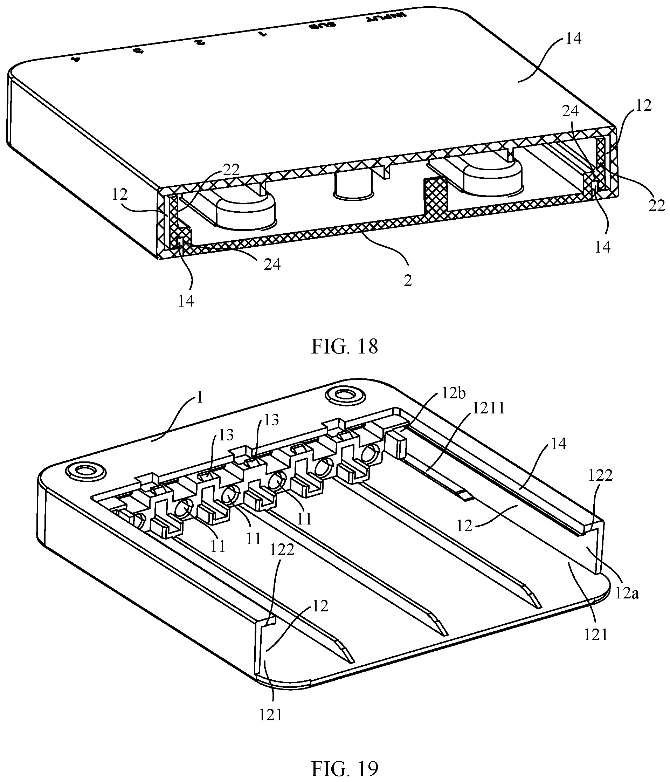

In some examples, as shown in FIG. 16 and FIG. 17, one of the first housing 1 and the second housing 2 is provided with a guide channel 12, and the other is provided with a guide rail 22. As shown in FIG. 18, the guide rail 22 is located within the guide channel 12, and extension directions of the guide channel 12 and the guide rail 22 are parallel to axial directions of the first sleeve 111 and the first optical fiber ferrule 4. In this way, relative sliding of the first housing 1 and the second housing 2 is implemented. In addition, when the guide rail 22 is located within the guide channel 12, the plurality of first optical fiber ferrules 4 are respectively aligned with the plurality of first sleeves 111.

In some examples, as shown in FIG. 16, the first housing 1 is provided with the guide channel 12. As shown in FIG. 17, the second housing 2 is provided with the guide rail 22.

In some examples, as shown in FIG. 19, the guide channel 12 has a first groove wall 121 and a second groove wall 122 that are opposite to each other. The first groove wall 121 of the guide channel 12 is provided with a first protrusion 1211. As shown in FIG. 20, the guide rail 22 has a first side wall 221 and a second side wall 222 that are opposite to each other, and the first side wall 221 is provided with a second protrusion 2211. As shown in FIG. 21, the first side wall 221 is opposite to the first groove wall 121, and the second side wall 222 is opposite to the second groove wall 122. The first protrusion 1211 abuts against the first side wall 221, the second protrusion 2211 abuts against the first groove wall 121, and the first protrusion 1211 and the second protrusion 2211 are staggered.

In this way, the first side wall 221 and the first groove wall 121 do not completely abut against each other, but only partially abut against each other (where positions in which the protrusions are located abut against each other, and there is a clearance between other positions), so that it can be ensured that the first housing 1 and the second housing 2 slide smoothly, and relative shaking of the first housing 1 and the second housing 2 is avoided.

The first protrusion 1211 and the second protrusion 2211 may be raised strips, or may be raised dots. In some examples, as shown in FIG. 19, the first protrusion 1211 is a raised strip. As shown in FIG. 20, the second protrusion 2211 is a raised dot.

Positions of the first protrusion 1211 and the second protrusion 2211 are not limited in embodiments of the present disclosure. In some examples, as shown in FIG. 21 to FIG. 23, the guide channel 12 has a first end 12a and a second end 12b. The guide rail 22 has a third end 22a and a fourth end 22b. In the process of assembling the first housing 1 and the second housing 2, the first end 12a of the guide channel 12 is first interconnected to the third end 22a of the guide rail 22. In this case, the first protrusion 1211 is close to the second end 12b of the guide channel 12, and the second protrusion 2211 is close to the fourth end 22b of the guide rail 22.

In the technical solution provided in embodiments of the present disclosure, in the process of assembling the first housing 1 and the second housing 2, because neither the first end 12a of the guide channel 12 nor the third end 22a of the guide rail 22 is provided with a protrusion, in an initial stage, the guide channel 12 and the guide rail 22 are in clearance fit, and the guide rail 22 can slide smoothly to the guide channel 12. Then, when the first protrusion 1211 is in contact with the first side wall 221 of the guide rail 22, and/or the second protrusion 2211 is in contact with the first groove wall 121 of the guide channel 12, the guide channel 12 and the guide rail 22 are closely fitted, and the guide rail 22 is not easily shaken. This improves alignment precision between the first optical fiber ferrule 4 and the first sleeve 111, and ensures that the first optical fiber ferrule 4 can smoothly slide to the first sleeve 111.

It may be understood that, if the first protrusion 1211 and the second protrusion 2211 are not provided, if all parts of the guide channel 12 and the guide rail 22 are in a clearance fit state, the first housing 1 and the second housing 2 easily shake relative to each other, and the alignment precision between the first optical fiber ferrule 4 and the first sleeve 111 is low. However, if all parts of the guide channel 12 and the guide rail 22 are in a closely fitted state, sliding smoothness of the first housing 1 and the second housing 2 is poor, and it is easy to get stuck in a sliding process, affecting assembly efficiency.

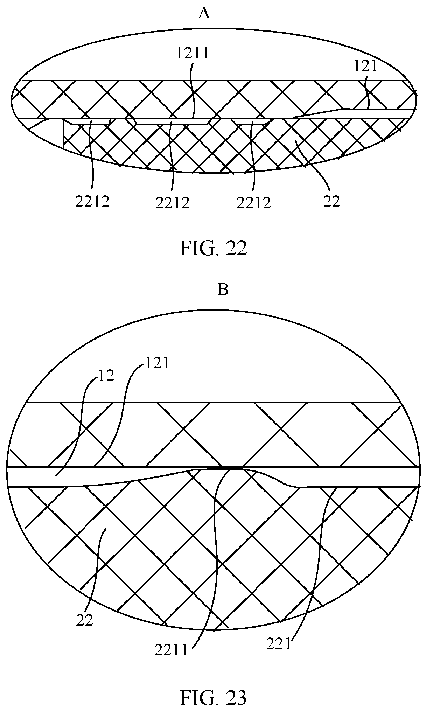

Forms of the first protrusion 1211 and the second protrusion 2211 are not limited in embodiments of the present disclosure. In some examples, as shown in FIG. 21 and FIG. 22, the first protrusion 1211 is in a long strip shape, and a part that is of the first side wall 221 and that abuts against the first protrusion 1211 is provided with a plurality of grooves 2212 arranged at intervals along the extension direction of the guide rail 22. In this way, a fitting length between the first protrusion 1211 and the first side wall 221 can be reduced, to ensure that the first housing 1 and the second housing 2 can slide smoothly relative to each other.

Certainly, in some other examples, the second protrusion 2211 may be in a long strip shape, a part that is of the first groove wall 121 and that abuts against the second protrusion 2211 is provided with a plurality of grooves 2212 arranged at intervals along the extension direction of the guide channel 12. In this way, a fitting length between the second protrusion 2211 and the first groove wall 121 can be reduced, to ensure that the first housing 1 and the second housing 2 can slide smoothly relative to each other.

In some examples, as shown in FIG. 16, the first housing 1 is provided with a baffle plate 14. As shown in FIG. 17, the second housing 2 is provided with a baffle groove 24. As shown in FIG. 18, the baffle plate 14 is located in the baffle groove 24.

A locking manner after the first housing 1 and the second housing 2 slide relative to each other to the locking position is not limited in embodiments of the present disclosure. In some examples, after the first housing 1 and the second housing 2 slide to the locking position, the first housing 1 and the second housing 2 may be locked by using a screw or a bolt.

In some other examples, as shown in FIG. 19 and FIG. 20, one of the first housing 1 and the second housing 2 is provided with a clamping protrusion 13, and the other is provided with a clamping slot 23. When the first housing 1 and the second housing 2 slide relative to each other to the locking position, the clamping protrusion 13 is clamped to the clamping slot 23.

To be specific, when the first housing 1 and the second housing 2 slide relative to each other to the locking position, the first housing 1 and the second housing 2 automatically complete locking at the same time. This further simplifies the assembly process of the optical splitter 200.

In some examples, as shown in FIG. 19, the first housing 1 is provided with the clamping protrusion 13. As shown in FIG. 20, the second housing 2 is provided with the clamping slot 23.

In some examples, as shown in FIG. 19, the clamping protrusion 13 is located between two adjacent coupling structures 11. In this way, the clamping protrusion 13 can be prevented from affecting forming of the coupling structure 11, and injection molding difficulty of the first housing 1 is reduced.

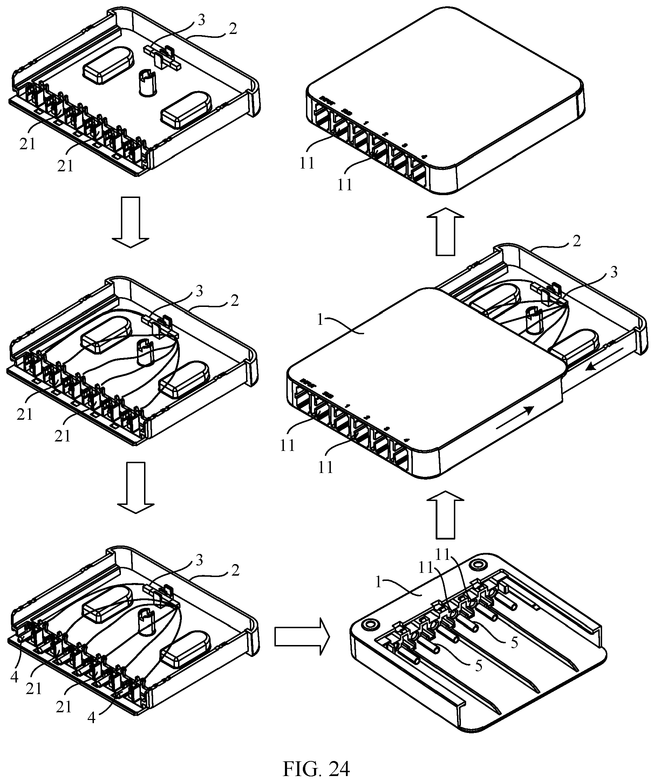

Refer to FIG. 24. The following uses an example to describe the assembly process of the optical splitter 200 provided in embodiments of the present disclosure.

Step 1: Fasten the optical splitter chip 3 on the second housing 2 through dispensing. Step 2: Couple the optical splitter chip 3 to an optical fiber array. Step 3: Fasten the first optical fiber ferrule 4 on the second housing 2 through dispensing, and fasten an optical fiber and the first optical fiber ferrule 4 through dispensing, so that the first optical fiber ferrule 4 is connected to the optical splitter chip 3 through the optical fiber; and then perform integrated grinding on the plurality of first optical fiber ferrules 4. Step 4: Place a plurality of second sleeves 5 in the plurality of coupling structures 11 of the first housing 1. Step 5: Assemble the first housing 1 and the second housing 2 to obtain the optical splitter 200.

It can be learned that, during assembly of the optical splitter 200 provided in embodiments of the present disclosure, the optical splitter chip 3 and the like do not need to be transferred from a tray to the housing, and operations of fastening the plurality of optical fiber adapters and respectively inserting the plurality of optical fiber connectors into the plurality of optical fiber adapters do not need to be performed. Compared with an assembly process of an optical splitter in a related technology, the assembly process of the optical splitter 200 provided in embodiments of the present disclosure is simpler.

It should be noted that, after integrated grinding is performed on the plurality of first optical fiber ferrules 4, the plurality of second sleeves 5 may also be sleeved on the plurality of first optical fiber ferrules 4. Then, the first housing 1 and the second housing 2 are assembled.

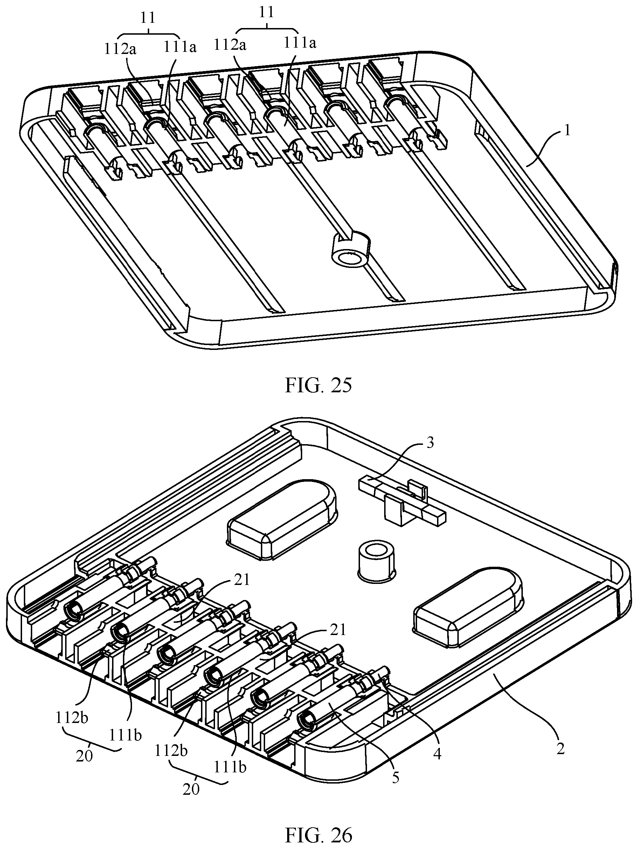

In addition to the foregoing implementations of the coupling structure 11, in some other examples, as shown in FIG. 25, the coupling structure 11 of the first housing 1 is a first coupling structure. The first coupling structure includes a first accommodating groove 111a. As shown in FIG. 26, the second housing 2 is further provided with a second coupling structure 20. The second coupling structure 20 includes a second accommodating groove 111b. The first accommodating groove 111a and the second accommodating groove 111b form the first sleeve 111, and the first sleeve 111 is configured to accommodate the second optical fiber ferrule of the external optical fiber connector and the first optical fiber ferrule 4 inside the optical splitter 200.

For the optical splitter 200 shown in FIG. 25 and FIG. 26, during assembly, the first optical fiber ferrule 4 (and the second sleeve 5) may be first placed in the first accommodating groove 111a or the second accommodating groove 111b, and then the first housing 1 and the second housing 2 are assembled in an up and down snap-fitting manner, so that the first accommodating groove 111a is opposite to the second accommodating groove 111b, to form the first sleeve 111.

In some examples, as shown in FIG. 25, the first coupling structure further includes a first sub-locking structure 112a. As shown in FIG. 26, the second coupling structure 20 further includes a second sub-locking structure 112b. After the first housing 1 and the second housing 2 are assembled, the first sub-locking structure 112a and the second sub-locking structure 112b form the first locking structure 112, and the first locking structure 112 is configured to lock the external optical fiber connector.

In a possible implementation, both the first sub-locking structure 112a and the second sub-locking structure 112b are clamping pieces, and the first locking structure 112 may be configured to lock an SC-type optical fiber connector.

Embodiments of the present disclosure further provide an optical network system. As shown in FIG. 1, the optical network system includes the foregoing optical splitter 200.

In some examples, as shown in FIG. 1, the optical network system includes a primary ONU 100, the optical splitter 200, and a plurality of secondary ONUs 300. The primary ONU 100 is connected to an input port of the optical splitter 200, and a plurality of output ports of the optical splitter 200 are respectively connected to the plurality of secondary ONUs 300.

In some examples, as shown in FIG. 1, a cascading port (SUB port) of the optical splitter 200 is connected to an input port of another optical splitter 200. In this way, a larger split ratio can be implemented by cascading the two optical splitters 200.

In some examples, the primary ONU 100 may be a primary FTTR device, and the secondary ONU 300 may be a secondary FTTR device.

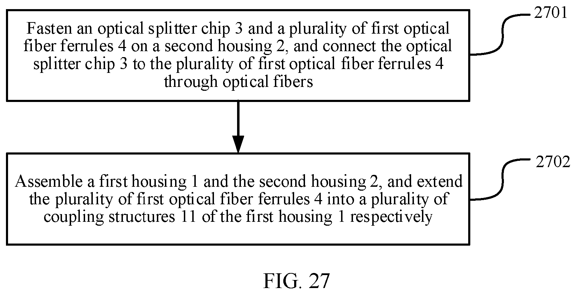

Embodiments of the present disclosure further provide an optical splitter assembling method. The assembling method is used for assembling the foregoing optical splitter 200. As shown in FIG. 27 and FIG. 24, the assembling method includes the following steps.

Step 2701: Fasten an optical splitter chip 3 and a plurality of first optical fiber ferrules 4 on a second housing 2, and connect the optical splitter chip 3 to the plurality of first optical fiber ferrules 4 through optical fibers.

In some examples, step 2701 may be performed by using the following steps: fastening the optical splitter chip 3 on the second housing 2; connecting the optical splitter chip 3 to first ends of a plurality of optical fibers; fastening the plurality of first optical fiber ferrules 4 on the second housing 2; and respectively connecting the plurality of first optical fiber ferrules 4 to second ends of the plurality of optical fibers.

In some examples, after the optical splitter chip 3 is connected to the plurality of first optical fiber ferrules 4 through the optical fibers, integrated grinding may be performed on the plurality of first optical fiber ferrules 4.

Step 2702: Assemble a first housing 1 and the second housing 2, and extend the plurality of first optical fiber ferrules 4 into a plurality of coupling structures 11 of the first housing 1 respectively. The coupling structure 11 is configured to couple the first optical fiber ferrule 4 to a second optical fiber ferrule of an external optical fiber connector.

In some examples, the first housing 1 and the second housing 2 are operated to slide relative to each other to a locking position, so that the first optical fiber ferrule 4 slides into the first sleeve 111.

In some examples, for a case in which the optical splitter 200 further includes a second sleeve 5, before the first housing 1 and the second housing 2 are assembled, a plurality of second sleeves 5 first respectively extend into a plurality of first sleeves 111. In this case, in a process of assembling the first housing 1 and the second housing 2, the plurality of first optical fiber ferrules 4 respectively extend into the plurality of second sleeves 5.

Alternatively, in some other examples, for a case in which the optical splitter 200 further includes a second sleeve 5, before the first housing 1 and the second housing 2 are assembled, a plurality of second sleeves 5 are first respectively sleeved on the plurality of first optical fiber ferrules 4. In this case, in a process of assembling the first housing 1 and the second housing 2, the plurality of first optical fiber ferrules 4 and the plurality of second sleeves 5 respectively extend into a plurality of first sleeves 111.

Terms used in implementations of the present disclosure are merely used to explain embodiments of the present disclosure, but are not intended to limit the present disclosure. Unless otherwise defined, technical terms or scientific terms used in implementations of the present disclosure should have the common meanings understood by a person of ordinary skill in the art to which the present disclosure pertains. The terms "first", "second", and the like used in the specification and claims of the present disclosure do not indicate any order, quantity, or importance, but are merely intended to distinguish between different constituents. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded. "Upper", "lower", "left", "right", or the like is only used to represent a relative position relationship. When an absolute position of a described object is changed, the relative position relationship may also change correspondingly. "A plurality of" means two or more, unless otherwise expressly limited.

The foregoing descriptions are merely optional embodiments of the present disclosure, but are not intended to limit the present disclosure. Any modification, equivalent replacement, improvement, or the like made within the principle of the present disclosure should fall within the protection scope of the present disclosure.

## Claims

1. An optical splitter, wherein the optical splitter comprises a first housing (1), a second housing (2), an optical splitter chip (3), and a plurality of first optical fiber ferrules (4);
the first housing (1) is provided with a plurality of coupling structures (11);
the second housing (2) is connected to the first housing (1), and an accommodating cavity (10) is formed between the first housing (1) and the second housing (2);
the optical splitter chip (3) is located in the accommodating cavity (10), the plurality of first optical fiber ferrules (4) are separately connected to the optical splitter chip (3) through optical fibers, and the plurality of first optical fiber ferrules (4) respectively extend into the plurality of coupling structures (11); and
the coupling structure (11) is configured to couple the first optical fiber ferrule (4) to a second optical fiber ferrule of an external optical fiber connector.

2. The optical splitter according to claim 1, wherein the coupling structure (11) comprises a first sleeve (111) and a first locking structure (112);
one end of the first sleeve (111) is used for extension of the second optical fiber ferrule of the external optical fiber connector, and the other end is used for extension of the first optical fiber ferrule (4);
the first locking structure (112) is configured to lock the external optical fiber connector; and
the second housing (2) is provided with a second locking structure (21), and the second locking structure (21) locks the first optical fiber ferrule (4).

3. The optical splitter according to claim 2, wherein the first optical fiber ferrule (4) comprises a ferrule (41) and a ferrule flange (42), the ferrule flange (42) and the ferrule (41) are coaxial and are fixedly connected, and the ferrule flange (42) is provided with a limiting convex ring (421); and
the second locking structure (21) comprises a limiting groove (211), the limiting convex ring (421) is located in the limiting groove (211), and the limiting groove (211) and the limiting convex ring (421) are used to limit movement of the first optical fiber ferrule (4) along an axial direction.

4. The optical splitter according to claim 3, wherein the limiting convex ring (421) is provided with one or more stop grooves (420) arranged along a circumferential direction; and
the second locking structure (21) further comprises a limiting rod (212), the limiting rod (212) extends into one of the stop grooves (420), and the limiting rod (212) and the stop groove (420) are used to limit rotation of the first optical fiber ferrule (4) along the circumferential direction.

5. The optical splitter according to claim 3 or 4, wherein the second locking structure (21) further comprises a clamping structure (213), and the ferrule flange (42) is clamped to the clamping structure (213).

6. The optical splitter according to any one of claims 2 to 5, wherein the second locking structure (21) comprises an abutting portion (214), and the first sleeve (111) is provided with a limiting step (1111) near its outer end;
the optical splitter further comprises a second sleeve (5), wherein the second sleeve (5) is located within the first sleeve (111), one end of the second sleeve (5) abuts against the limiting step (1111), and the other end abuts against the abutting portion (214); and
the first optical fiber ferrule (4) extends into the second sleeve (5).

7. The optical splitter according to any one of claims 2 to 5, wherein both the two ends of the first sleeve (111) are provided with limiting steps (1111);
the optical splitter further comprises a second sleeve (5), wherein the second sleeve (5) is located within the first sleeve (111), and two ends of the second sleeve (5) respectively abut against the limiting steps (1111) at the two ends of the first sleeve (111); and
the first optical fiber ferrule (4) extends into the second sleeve (5).

8. The optical splitter according to any one of claims 1 to 7, wherein the plurality of first optical fiber ferrules (4) are fastened on the second housing (2) and protrude from a same side of the second housing (2).

9. The optical splitter according to claim 1, wherein the coupling structure (11) comprises a first sleeve (111), one end of the first sleeve (111) is used for extension of the second optical fiber ferrule of the external optical fiber connector, and the other end is used for extension of the first optical fiber ferrule (4); and
in a process of assembling the first housing (1) and the second housing (2), the first housing (1) and the second housing (2) can slide relative to each other to a locking position, and the plurality of first optical fiber ferrules (4) respectively extend into a plurality of first sleeves (111).

10. The optical splitter according to claim 1 or 9, wherein one of the first housing (1) and the second housing (2) is provided with a guide channel (12), and the other is provided with a guide rail (22); and
the guide rail (22) is located within the guide channel (12), and extension directions of the guide channel (12) and the guide rail (22) are parallel to axial directions of the first optical fiber ferrule (4).

11. The optical splitter according to claim 10, wherein a first groove wall (121) of the guide channel (12) is provided with a first protrusion (1211), and a first side wall (221) of the guide rail (22) is provided with a second protrusion (2211); and
the first groove wall (121) is opposite to the first side wall (221), the first protrusion (1211) abuts against the first side wall (221), the second protrusion (2211) abuts against the first groove wall (121), and the first protrusion (1211) and the second protrusion (2211) are staggered.

12. The optical splitter according to claim 11, wherein the guide channel (12) has a first end (12a) and a second end (12b), the guide rail (22) has a third end (22a) and a fourth end (22b), and in the process of assembling the first housing (1) and the second housing (2), the first end (12a) of the guide channel (12) is first interconnected to the third end (22a) of the guide rail (22); and
the first protrusion (1211) is close to the second end (12b) of the guide channel (12), and the second protrusion (2211) is close to the fourth end (22b) of the guide rail (22).

13. The optical splitter according to claim 11 or 12, wherein a part that is of the first side wall (221) and that abuts against the first protrusion (1211) is provided with a plurality of grooves (2212) arranged at intervals along the extension direction of the guide rail (22); and/or
a part that is of the first groove wall (121) and that abuts against the second protrusion (2211) is provided with a plurality of grooves (2212) arranged at intervals along the extension direction of the guide channel (12).

14. The optical splitter according to any one of claims 9 to 13, wherein one of the first housing (1) and the second housing (2) is provided with a clamping protrusion (13), and the other is provided with a clamping slot (23); and
when the first housing (1) and the second housing (2) slide relative to each other to the locking position, the clamping protrusion (13) is clamped to the clamping slot (23).

15. The optical splitter according to claim 14, wherein the first housing (1) is provided with the clamping protrusion (13), and the clamping protrusion (13) is located between two adjacent coupling structures (11); and
the second housing (2) is provided with the clamping slot (23), and the clamping slot (23) is located between two adjacent first optical fiber ferrules (4).

16. The optical splitter according to claim 1, wherein the coupling structure (11) of the first housing (1) is a first coupling structure, and the first coupling structure comprises a first accommodating groove (111a);
the second housing (2) is further provided with a second coupling structure (20), and the second coupling structure (20) comprises a second accommodating groove (111b); and
the first accommodating groove (111a) and the second accommodating groove (111b) form a first sleeve (111), and the first sleeve (111) is configured to accommodate the first optical fiber ferrule (4) and the second optical fiber ferrule of the external optical fiber connector.

17. An optical network system, wherein the optical network system comprises the optical splitter (200) according to any one of claims 1 to 16 and an optical network unit connected to the optical splitter.

18. An optical splitter assembling method, wherein the assembling method comprises:
fastening an optical splitter chip (3) and a plurality of first optical fiber ferrules (4) on a second housing (2), and connecting the optical splitter chip (3) to the plurality of first optical fiber ferrules (4) through optical fibers; and
assembling a first housing (1) and the second housing (2), and extending the plurality of first optical fiber ferrules (4) into a plurality of coupling structures (11) of the first housing (1) respectively, wherein the coupling structure (11) is configured to couple the first optical fiber ferrule (4) to a second optical fiber ferrule of an external optical fiber connector.

19. The assembling method according to claim 18, wherein the fastening an optical splitter chip (3) and a plurality of first optical fiber ferrules (4) on a second housing (2), and connecting the optical splitter chip (3) to the plurality of first optical fiber ferrules (4) through optical fibers comprises:
fastening the optical splitter chip (3) on the second housing (2);
connecting the optical splitter chip (3) to first ends of a plurality of optical fibers;
fastening the plurality of first optical fiber ferrules (4) on the second housing (2); and
respectively connecting the plurality of first optical fiber ferrules (4) to second ends of the plurality of optical fibers.

20. The assembling method according to claim 18 or 19, wherein the plurality of first optical fiber ferrules (4) protrude from a same side of the second housing (2); and
after the connecting the optical splitter chip (3) to the plurality of first optical fiber ferrules (4) through optical fibers, the assembling method further comprises:
performing integrated grinding on the plurality of first optical fiber ferrules (4).

21. The assembling method according to any one of claims 18 to 20, wherein the coupling structure (11) comprises a first sleeve (111), one end of the first sleeve (111) is used for extension of the second optical fiber ferrule of the external optical fiber connector, the other end is used for extension of the first optical fiber ferrule (4), and an optical splitter further comprises a plurality of second sleeves (5); and
before the assembling a first housing (1) and the second housing (2), the assembling method further comprises:
extending the plurality of second sleeves (5) into a plurality of first sleeves (111) respectively.

22. The assembling method according to any one of claims 18 to 20, wherein the coupling structure (11) comprises a first sleeve (111), one end of the first sleeve (111) is used for extension of the second optical fiber ferrule of the external optical fiber connector, the other end is used for extension of the first optical fiber ferrule (4), and an optical splitter further comprises a plurality of second sleeves (5); and
before the assembling a first housing (1) and the second housing (2), the assembling method further comprises:
respectively sleeving the plurality of second sleeves (5) on the plurality of first optical fiber ferrules (4).

23. The assembling method according to any one of claims 18 to 22, wherein the coupling structure (11) comprises the first sleeve (111), one end of the first sleeve (111) is used for extension of the second optical fiber ferrule of the external optical fiber connector, and the other end is used for extension of the first optical fiber ferrule (4); and
the assembling a first housing (1) and the second housing (2), and extending the plurality of first optical fiber ferrules (4) into a plurality of coupling structures (11) of the first housing (1) respectively comprises:
operating the first housing (1) and the second housing (2) to slide relative to each other to a locking position, and allow the plurality of first optical fiber ferrules (4) respectively to extend into the plurality of first sleeves (111).
